# DEMANDE DE BREVET EUROPEEN

(11) **EP 2 613 123 A2**
(43) Date de publication de la demande: **10.07.2013**
(21) Numéro de dépôt: 13150061.3
(22) Date de dépôt: 02.01.2013
(51) Int. Cl.: G01C 11/02, B64G 1/10, G06K 9/32

(54) **Procede d'étalonnage des biais d'alignement d'un système d'observation de la terre exploitant des prises de vue symétriques**

(30) Priorité: 03.01.2012 FR 1250041
(71) Demandeur: CENTRE NATIONAL D'ETUDES SPATIALES, 75001 Paris (FR)
(72) Inventeur: Delvit, Jean-Marc, 31400 TOULOUSE (FR)
(74) Mandataire: Regimbeau

(57) **Abrégé**

Selon un premier aspect, l'invention concerne un procédé d'étalonnage des biais d'alignement d'un repère de visée d'un système de prise de vues embarqué au sein d'un satellite d'observation, dans lequel on compare une image de référence d'une scène avec une image secondaire de la scène acquise par le système de prise de vues,
caractérisé en ce que l'image de référence et l'image secondaire consistent en des prises de vues de la scène acquises par le système de prises de vues, le sens de déplacement du satellite d'observation lors de la prise de vue de l'image secondaire étant opposé au sens de déplacement du satellite d'observation lors de la prise de vue de l'image de référence.

## Description

### DOMAINE DE L'INVENTION

Le domaine de l'invention est celui des satellites d'observation, et plus particulièrement celui de l'étalonnage des systèmes de prise de vues embarqués au sein de tels satellites.

Encore plus précisément, l'invention concerne l'étalonnage en vol des biais d'alignement d'un système d'observation de la terre.

### ARRIERE PLAN DE L'INVENTION

Une recette en vol d'un satellite d'observation démarre dès le contrôle du bon fonctionnement du satellite et dure quelques mois. Cette recette est mise en oeuvre afin de vérifier l'adéquation du système aux spécifications et permettre la diffusion et la commercialisation d'images avec la meilleure localisation possible.

L'estimation des performances géométriques est également suivie tout au long de la vie du satellite, afin de pouvoir identifier d'éventuelles évolutions ou anomalies.

L'étalonnage géométrique est le premier objectif de la recette en vol géométrique. Il vise à fournir aux traitements sol certains des paramètres géométriques intervenant dans les modélisations et les traitements géométriques. Ces paramètres ont été préalablement mesurés au sol mais certains d'entre eux ont pu évoluer à l'issue du lancement ; d'autres n'ont pu être mesurés qu'avec une précision insuffisante. Ces paramètres comprennent l'orientation du repère de visée.

On cherche ainsi lors d'un étalonnage géométrique en vol à réaliser un étalonnage du repère de visée, ou étalonnage des biais d'alignement, consistant à déterminer l'orientation absolue du repère de visée.

Comme décrit aux pages 137-141 de l'ouvrage « Imagerie Spatiale, Des principes d'acquisition au traitement des images optiques pour l'observation de la Terre» publié aux éditions Cépaduès (ISBN : 978.2.85428.844.5), l'étalonnage géométrique des biais d'alignement se fait aujourd'hui en utilisant principalement des sites géométriquement parfaitement connu planimétriquement et altimétriquement. Ces sites sont de différentes formes (images et modèles géométriques, points d'appui, modèles 3D...), et de différentes précisions.

Ces sites sont composés de deux familles principales, l'une permettant d'étalonner les biais d'alignements et de mesurer la performances de localisation (base de donnée de points d'appui), l'autre permettant de faire de la géométrie fine au travers d'analyse dynamique et statique autorisant une analyse fine des résidus d'attitude et une cartographie des différents plans focaux (supersite géométrique). Outre les problèmes de précisions, se pose également le problème de vieillissement de ces référence, notamment lorsque cette référence est une image (supersite), ou accompagnée d'une imagette (point d'appui)

On cherche d'une manière générale une technique pour étalonner géométriquement un système d'observation de la terre qui passerait outre ces contraintes.

### EXPOSÉ DE L'INVENTION

L'invention a pour objectif de répondre à ces besoins, et propose à cet effet selon un premier aspect, un procédé d'étalonnage des biais d'alignement en roulis et en tangage d'un repère de visée d'un système de prise de vues embarqué au sein d'un satellite d'observation, dans lequel on compare une image de référence d'une scène avec une image secondaire de la scène acquise par le système de prise de vues, **caractérisé en ce que** l'image de référence et l'image secondaire consistent en des prises de vues de la scène acquises par le système de prises de vues, le sens de déplacement du satellite d'observation lors de la prise de vue de l'image secondaire étant opposé au sens de déplacement du satellite d'observation lors de la prise de vue de l'image de référence.

Ce procédé permet ainsi de s'affranchir des points d'appui pour étalonner les biais d'alignement d'un système d'observation de la terre.

Certains aspects préférés, mais non limitatifs, de ce procédé sont les suivants :
- la comparaison de l'image de référence et de l'image secondaire met en oeuvre une corrélation desdites images ;
- il comprend en outre le moyennage d'une ligne et le moyennage d'une colonne de la matrice obtenue par la corrélation de l'image de référence et de l'image secondaire pour estimer respectivement le biais en tangage et le biais en roulis ;
- l'estimation des biais en tangage et en roulis est réalisée par spatio-triangulation ;
- l'image de référence et l'image secondaire sont acquises lors d'une même passe du satellite d'observation au-dessus de la scène ;
- il comprend préalablement à la comparaison de l'image de référence et de l'image secondaire, une étape de colocalisation desdites images visant à projeter l'image secondaire dans l'image de référence pour les rendre quasi-superposables ;
- le procédé étant mis en oeuvre pour une pluralité de scènes, on estime des biais d'alignement moyen en moyennant d'une part les estimations de biais en tangage calculées pour chaque scène de la pluralité de scènes et d'autre part les estimations de biais en roulis calculées pour chaque scène de la pluralité de scènes ;
- on calcule l'écart type des estimations de biais en tangage et l'écart type des estimations de biais en roulis.

Selon un second aspect, l'invention concerne un produit programme d'ordinateur comprenant un ensemble d'instructions qui lorsqu'elles sont exécutées par une unité de traitement informatique entraînent ladite unité à exécuter les étapes du procédé selon le premier aspect de l'invention.

Selon un troisième aspect, l'invention concerne un système de prise de vues destiné à être embarqué dans un satellite d'observation, comprenant une barrette de détection formée d'une pluralité de détecteurs et un programme informatique selon le second aspect de l'invention qui lorsqu'il est mis en oeuvre permet de réaliser un étalonnage des biais d'alignement en roulis et en tangage du système de prise de vues.

### BREVE DESCRIPTION DES DESSINS

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 illustre les prises de vues d'une image de référence et d'une image secondaire d'une même scène conformément à l'invention ;
- la figure 2 illustre le principe de mesure des décalages moyens ligne et colonne pour remonter aux biais en tangage et en roulis ;
- la figure 3 est un schéma illustrant les différentes étapes d'un mode de réalisation possible du procédé selon le premier aspect de l'invention.

### DESCRIPTION DETAILLEE DE L'INVENTION

D'une manière générale, l'invention propose selon un premier aspect un procédé de d'étalonnage des biais d'alignement d'un repère de visée d'un système de prise de vues embarqué au sein d'un satellite d'observation, qui permet de s'affranchir de points d'appui en étant basé sur deux acquisitions symétriques (pas nécessairement mono-passe) d'une même scène. L'avantage principal de ce type d'acquisitions est de symétriser au sol les effets dus à des biais en roulis et en tangage.

L'invention propose ainsi de comparer une image de référence d'une scène avec une image secondaire de la même scène acquise par le système de prise de vues. L'image de référence et l'image secondaire consistent en des prises de vues de la scène acquises par le système de prises de vues, le sens de déplacement du satellite d'observation lors de la prise de vue de l'image secondaire étant opposé au sens de déplacement du satellite d'observation lors de la prise de vue de l'image de référence.

Ainsi, si un effet en roulis positif pour la première prise de vue (image de référence) se traduit par un décalage vers l'Est, le même effet en roulis positif sur la seconde prise de vue (image secondaire) se traduit par un décalage vers l'Ouest. Idem pour le Tangage en Nord/Sud. En mesurant l'écart des deux prises de vue au sol, on obtient un observable corrélé au double des biais d'alignement (en roulis et en tangage).

Lancé en Décembre 2011, le satellite d'observation de la Terre PLEAIADES présente l'avantage d'être agile en ce sens qu'il peut rapidement changer sa direction de visée en basculant de part et d'autre du plan orbital ou d'avant en arrière. Cette faculté d'évolution permet de réaliser des mosaïques d'images avec un champ élargi ou de composer des vues d'une même scène prises sous différents angles afin par exemple de restituer une scène en 3D.

Un satellite agile tel que le satellite PLEIADES peut être manoeuvré en lacet dans le cadre de l'invention pour réaliser l'acquisition du couple d'images formé par l'image de référence et l'image secondaire. Plus précisément, l'image de référence peut être acquise classiquement en utilisant le défilement du satellite, et l'image secondaire peut être acquise après une manoeuvre en lacet de 180°, la barrette de détection du système de prise de vue ainsi tournée permettant à l'aide d'une manoeuvre en tangage de ré-imager la même scène. La manoeuvre en tangage vient alors "s'opposer" au défilement naturel du satellite.

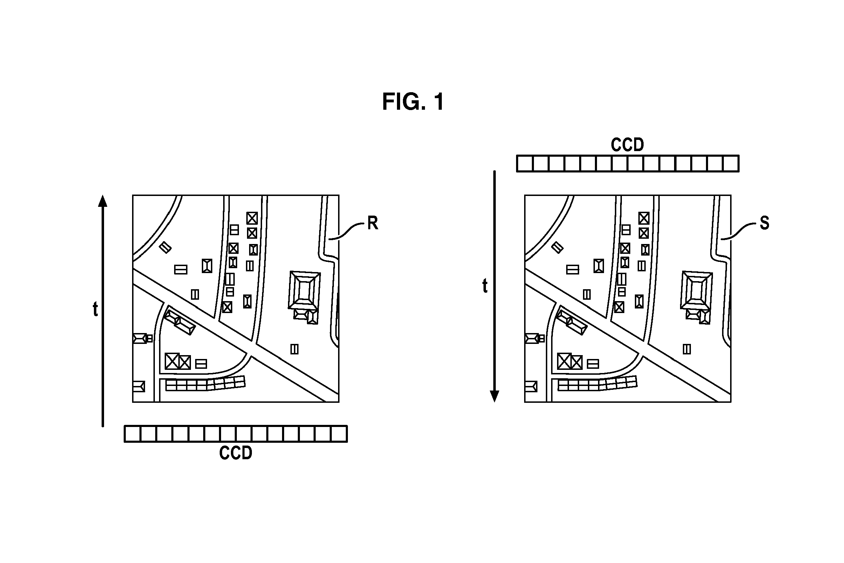

On a représenté sur la figure 1 les prises de vues « symétriques » d'une image de référence R et d'une image secondaire S d'une même scène conformément à l'invention.

Sur cette figure 1, la référence CCD illustre la position de la barrette de détection du système de prise de vue du satellite d'observation. Cette barrette, typiquement du type CCD (« Charge-Coupled Device » désignant un dispositif à transfert de charge), comprend une pluralité de capteurs photosensibles disposés en ligne, par exemple de l'ordre de 4000 à 6000 capteurs par ligne. La référence t illustre quant à elle le déplacement du satellite au cours du temps. On relèvera que l'invention n'est pas limitée à des capteurs à défilement de type « push-broom » mais s'étend également à des capteurs de type matriciels.

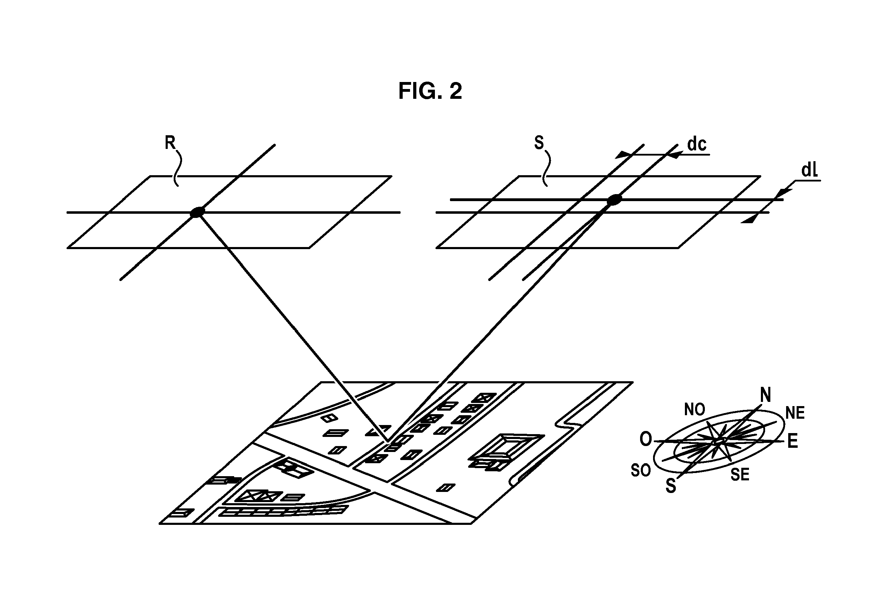

On a représenté sur la figure 2 le principe de mesure des décalages moyens ligne et colonne entre l'image de référence et l'image secondaire pour remonter aux biais en tangage et en roulis. Le décalage en ligne dl est caractéristique du double du biais en tangage tandis que le décalage en colonne dc est caractéristique du double du biais en roulis.

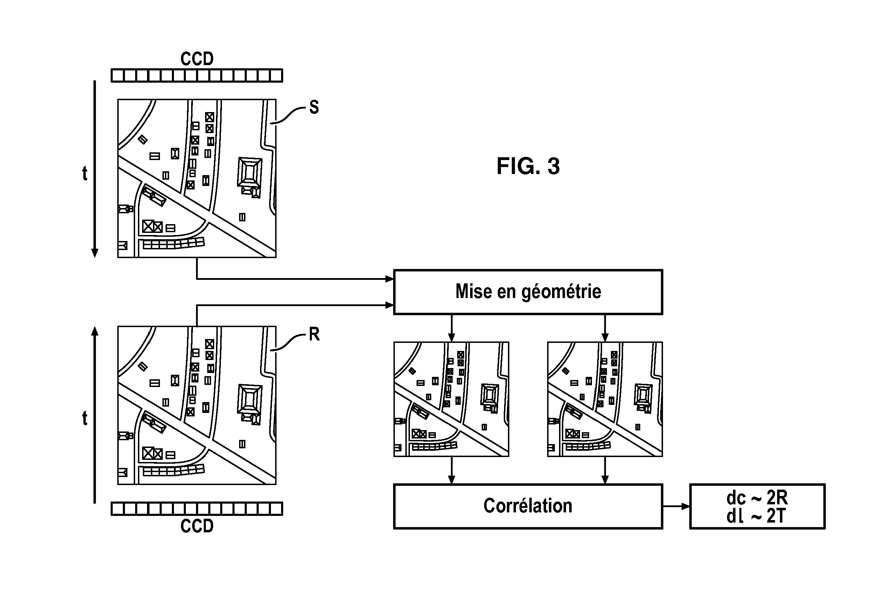

La figure 3 est un schéma illustrant les différentes étapes d'un mode de réalisation possible du procédé selon le premier aspect de l'invention.

Selon une première étape dite de « mise en géométrie », on choisit dans le couple d'images un produit de référence et un produit secondaire. On utilise alors les modèles géométrique de l'image de référence et de l'image secondaire, afin d'injecter dans les images toutes la connaissance délivrée par le système (modèle numérique de terrain, attitudes, cartographie du plan focal existant...). Les deux images sont alors quasi-superposables. Les seules différences proviennent de la méconnaissance du plan focal et des erreurs d'attitudes résiduelles (non restituées par le Système de Commande d'Attitude et d'Orbite SCAO).

Cette étape de « mise en géométrie » consiste ainsi à projeter la première image du couple dans la seconde. Plus précisément, on met en oeuvre une transformation dite de « colocalisation » pour mettre en correspondance toutes les positions lignes, colonnes de la première image avec les positions lignes et colonnes de la deuxième image. On utilise pour ce faire le modèle de localisation directe de la première image (en utilisant toutes les informations contenues dans les données auxiliaires du produit) afin d'obtenir une information sur la position de cette image au sol. On utilise ensuite cette information sol et le modèle de localisation inverse de la seconde image.

Selon une seconde étape, on réalise la comparaison, par exemple par corrélation, de l'image secondaire et de l'image de référence pour estimer les biais en tangage et en roulis.

On retiendra que l'invention n'est pas limitée à la mise en oeuvre d'une corrélation, mais s'étend à toute autre technique de mesure de décalage entre images.

On vient ensuite calculer le décalage moyen en ligne et en colonne pour estimer respectivement le biais en tangage et le biais en roulis. Le décalage moyen en ligne correspond effectivement à deux fois le biais en tangage et le décalage moyen en colonne correspond à deux fois le biais en roulis.

Ainsi, le moyennage d'une ligne et le moyennage d'une colonne de la matrice obtenue par la corrélation de l'image de référence et de l'image secondaire permet d'estimer respectivement le biais en tangage et le biais en roulis.

Selon un mode de réalisation possible, l'estimation des biais en tangage et en roulis est réalisée par spatio-triangulation.

Cette seconde étape est avantageusement reproduite plusieurs fois sur une pluralité de scènes (par exemple une trentaine de scènes comme cela est le cas des techniques classiques d'étalonnage géométrique) et donc plusieurs couples image de référence/image secondaire. On vient alors estimer des biais d'alignement moyen en moyennant d'une part les estimations de biais en tangage calculées pour chaque scène de la pluralité de scènes et d'autre part les estimations de biais en roulis calculées pour chaque scène de la pluralité de scènes. L'écart-type des estimations de biais en tangage et l'écart type des estimations en roulis sont en outre avantageusement calculés pour fournir une estimation de la performance de localisation.

On aura compris que l'intérêt principal du procédé selon le premier aspect de l'invention est qu'il autorise la réalisation d'un étalonnage autonome des biais d'alignement ne nécessitant pas de supersites (ce qui permet donc de passer outre les contraintes de création, exploitation et entretien des supersites) mais également de points d'appui (GPS, cartes, etc.).

Ce procédé permet en outre de se passer d'une localisation spécifique (liée aux supersites). Il est alors possible d'étalonner les biais d'alignement sur des sites à différentes latitudes, ce qui permet de suivre une éventuelle évolution thermo élastique de ces biais, et d'utiliser en suivi de routine des orbites peu chargées. Il est en outre possible d'utiliser un grand nombre de sites et donc d'améliorer la précision de l'étalonnage géométrique.

On comprendra que l'invention n'est pas limitée au procédé selon son premier aspect, mais s'étend également selon un second aspect à un produit programme d'ordinateur comprenant un ensemble d'instructions qui lorsqu'elles sont exécutées par une unité de traitement informatique entraînent ladite unité à exécuter les étapes du procédé selon le premier aspect de l'invention. L'invention s'étend par ailleurs à un système de prise de vues destiné à être embarqué dans un satellite d'observation, lequel système comprend une barrette de détection formée d'une pluralité de détecteurs et un produit programme d'ordinateur selon le second aspect de l'invention qui lorsqu'il est mis en oeuvre permet de réaliser un étalonnage du système de prise de vues.

## Revendications

1. Procédé d'étalonnage des biais d'alignement en roulis et en tangage d'un repère de visée d'un système de prise de vues embarqué au sein d'un satellite d'observation, dans lequel on compare une image de référence d'une scène avec une image secondaire de la scène acquise par le système de prise de vues,
**caractérisé en ce que** l'image de référence et l'image secondaire consistent en des prises de vues de la scène acquises par le système de prises de vues, le sens de déplacement du satellite d'observation lors de la prise de vue de l'image secondaire étant opposé au sens de déplacement du satellite d'observation lors de la prise de vue de l'image de référence.

2. Procédé selon la revendication 1, dans lequel la comparaison de l'image de référence et de l'image secondaire met en oeuvre une corrélation desdites images.

3. Procédé selon la revendication 2, comprenant en outre le moyennage d'une ligne et le moyennage d'une colonne de la matrice obtenue par la corrélation de l'image de référence et de l'image secondaire pour estimer respectivement le biais en tangage et le biais en roulis.

4. Procédé selon la revendication 3, dans lequel l'estimation des biais en tangage et en roulis est réalisée par spatio-triangulation.

5. Procédé selon l'une des revendications précédentes, dans lequel l'image de référence et l'image secondaire sont acquises lors d'une même passe du satellite d'observation au-dessus de la scène.

6. Procédé selon l'une des revendications précédentes, comprenant préalablement à la comparaison de l'image de référence et de l'image secondaire, une étape de colocalisation desdites images visant à projeter l'image secondaire dans l'image de référence pour les rendre quasi-superposables.

7. Procédé selon l'une des revendications précédentes, **caractérisé en ce qu'il** est mis en oeuvre pour une pluralité de scènes et **en ce que** l'on estime des biais d'alignement moyen en moyennant d'une part les estimations de biais en tangage calculées pour chaque scène de la pluralité de scènes et d'autre part les estimations de biais en roulis calculées pour chaque scène de la pluralité de scènes.

8. Procédé selon la revendication précédente, dans lequel on calcule l'écart type des estimations de biais en tangage et l'écart type des estimations de biais en roulis.

9. Produit programme d'ordinateur comprenant un ensemble d'instructions qui lorsqu'elles sont exécutées par une unité de traitement informatique entraînent ladite unité à exécuter les étapes du procédé selon l'une quelconque des revendications précédentes.

10. Système de prise de vues destiné à être embarqué dans un satellite d'observation, comprenant une barrette de détection formée d'une pluralité de détecteurs et un programme informatique selon la revendication 9 qui lorsqu'il est mis en oeuvre permet de réaliser un étalonnage des biais d'alignement en roulis et en tangage du repère de visée du système de prise de vues.
